# EUROPEAN PATENT SPECIFICATION

(11) **EP 1 107 879 B1**
(45) Date of publication and mention of the grant of the patent: **01.10.2003**
(21) Application number: 98941172.3
(22) Date of filing: 26.08.1998
(51) Int. Cl.: B60N 3/00

(54) **Motor Vehicle Tray**
Tischplatte für Kraftfahrzeuge
Plateau pour véhicule à moteur

(43) Date of publication of application: 20.06.2001
(73) Proprietor: Meeus, Emmanuel, 1200 Bruxelles (BE); Stiernon, Gontran, 1500 Halle (BE)
(72) Inventor: Meeus, Emmanuel, 1200 Bruxelles (BE); Stiernon, Gontran, 1500 Halle (BE)
(74) Representative: De Vleeschauwer, Natalie
(86) International application number: BE9800126
(87) International publication number: WO00012352

(56) References cited:
- BE-A- 794 697
- BE-A- 906 068
- DE-B- 1 932 357
- GB-A- 1 550 899
- GB-A- 2 144 627
- US-A- 4 974 805
- US-A- 5 060 581
- US-A- 5 413 035
- US-A- 5 845 585

## Description

### THE PRIOR ART

Supporting trays adapted for mounting on the steering wheel of a motor vehicle are known by various documents, among others US 4,915,035, US 3,643,606, US 3,952,988, BE 906,068, BE 794,697.

The tray of US 4,915,035 is provided with two right angle frames slidably engaging the wheel. When the tray is placed on the wheel, the tray is subjected to a pivotment. The said frames need to be sufficiently rigid so as to be able to resist to the forces and moments exerted when placing foods or drinks on the tray. Furthermore, as the upper part of the wheel is very accessible, a high risk exists that a person will move the wheel supporting the tray, whereby loss of drinks or foods out of the tray is possible. Such a tray is therefore not stable enough.

The tray of BE 906,068 comprises two plates linked together by means of an articulation and by means of two cords so as to maintain a first plate substantially horizontal when the other plate rests on the wheel. Said other plate is mounted on the wheel by (a) two supporting blocks contacting the wheel and (b) an elastic band. The placement of this tray on a wheel is quite complicated and the elastic band has to be adapted for resisting the weight of the foods and drinks placed on the first plate.

Document GB-A-1 550 899 describes a motor vehicle tray which comprises two panels, i.e. a mounting panel and a shelf hinaedly connected to the mounting panel. The back surface of the mounting panel is "provided with a pair of rearwardly extending hook pieces whose openings face one another and which enable the mounting panel to be mounted onto the steering wheel.

### SUMMARY OF THE INVENTION

The present invention has for subject matter a device with supporting tray which can easily be mounted on the steering wheel of a motor vehicle. The supporting tray when mounted on the wheel is stable. Furthermore, in case of inadequate placement of the tray whereby the tray does not extend in a horizontal plane, the tray can easily be moved with respect to the wheel so as to extend in a substantially horizontal plane.

The invention as defined in claim 1 relates to a device with supporting tray adapted for mounting on a substantially circular wheel of a motor vehicle, said device comprising
(a) a rigid panel with a front face and a back face, the said panel being divided by two parallel traverse pivotal lines in three parts, namely a first central part extending between the two pivotal lines, a second part linked to said first part along the first pivotal line, and a third part linked to said first part along the second pivotal line, the second part having an substantially rectangular opening, the larger edges thereof having a length lower than the diameter of the wheel, but greater than 15 cm, while the small edges of the opening have a length at least equal to the thickness of the wheel, said opening being adapted to slide along the wheel so that a part of the wheel passes through said opening, whereby the small edges of the opening rest on the wheel and whereby the back face of the first part partly contacts the wheel, and
(b) at least one means for linking the third part and the fist part together so as to maintain said third part substantially horizontal.

Further features of the invention are disclosed in the dependent claims.

Advantageously, the larger edges of the rectangular opening have a length of at least 20 cm, for example between 20 and 30 cm, more specifically about 25 cm. The small edges of the opening have a length for example from 3 to 7 cm, more specifically about 5 cm.

Advantageously, the opening of the second part is distant from the first pivotal line, whereby after mounting the second part on die wheel by sliding the opening along said wheel, the back face of the first part only contacts the wheel in the neighbourhood of the second pivotal line, the part of said back face of the first part adjacent to the first pivotal line being distant from the wheel.

Preferably, the opening of the second part has a larger edge adjacent to the first pivotal line, but located at a distance of at least 0.5 cm from said first pivotal line, whereby after mounting the second part on the wheel by sliding the opening along said wheel, the back face of the first part only contacts the wheel in the neighbourhood of the second pivotal line, the part of said back face of the first part adjacent to the first pivotal line being distant from said wheel of at least 0.5 cm.

According to an embodiment, the means for linking the first part and the third part together for maintaining the third part substantially horizontal consists of links provided with means for adjusting the length of the links between the first and the third parts.

According to a specific embodiment, the means for linking the first part and the third part together for maintaining the third part substantially horizontal consists of links provided with stops, the stops of each link co-operating with an opening of the third part so as to adjust the length of the link between the first and the third part.

According to a specific example of device, in which the first part extends between a first lateral edge and a second lateral edge and has a first slot extending from said first lateral edge and a second slot extending from the second lateral edge, the means for linking the third part and the first part together consists of a first cord provided with stops and a second cord provided with stops, each cord being attached to the third part, the first cord being inserted in the first slot so that one stop of the cord abuts against the back face of the first part, while the second cord is inserted in the second slot so that one stop of the cord abuts against the back face of the first part.

According to another specific example of device, in which the third part extends between a first lateral edge and a second lateral edge and has a first slot extending from said first lateral edge and a second slot extending from the second lateral edge, the means for linking the third part and the first part together consists of a first cord provided with stops and a second cord provided with stops, each cord being attached to the first part, the first cord being inserted in the first slot so that one stop of the cord abuts against the back face of the third part, while the second cord is inserted in the second slot so that one stop of the cord abuts against the back face of the third part.

According to still another specific example of device, in which the first part extends between a first lateral edge and a second lateral edge and has a first slot extending from said first lateral edge and a second slot extending from the second lateral edge, and
in which the third part extends between a first lateral edge and a second lateral edge and has a first slot extending from said first lateral edge and a second slot extending from the second lateral edge,
the means for linking the third part and the first part together consists of a first cord provided with stops and a second cord provided with stops, the first cord being inserted in the first slot of the first part and in the first slot of the third part so that one stop of the cord abuts against the back face of the first part, while another stop of the cord abuts against the back face of the third part, while the second cord is inserted in the second slot of the first part and in the second slot of the third part so that one stop of the cord abuts against the back face of the first part, while another stop of the cord abuts against the back face of the third part.

The rigid panel can be made from various types of cardboard, plywood, metal, plastic material (such as rigid PVC) or any other material which is sufficiently rigid to support the articles which are intended to be held by the device.

The pivotal lines are advantageously formed by a means extending between the two opposite lateral edges of the panel, said means being for example selected from the group consisting of grooves, partial cuttings, cuttings extending partly in the thickness of the panel, rows of holes, and combinations thereof. For example, the first and second pivotal lines are formed respectively by a first groove extending between the two lateral edges of the panel and a second groove extending between the two lateral edges of the panel, the first groove being located on the front face of the panel, while the second groove is located on the back face of the panel.

When the rigid panel is made from a material such as plywood, metal or rigid PVC, it may be appropriate or even necessary that the first part of the panel be connected to the second part and to the third part respectively, by way of hinges (e.g. piano hinges) or by way of pliable strips.

Preferably, the slots of the first and/or third part are not parallel to the pivotal lines and extend between a first end located along one lateral edge of the panel and a second end, the distance separating said second end from the second pivotal line being lower than the distance separating the first end from the second pivotal line.

### BRIEF DESCRIPTION OF THE DRAWINGS

Fig 1 is a perspective view of a tray device of the invention;
Fig 2 is a perspective view of the tray device of Fig 1, folded in compact position;
Fig 3 is a perspective view of the tray device of Fig 1 mounted on a steering wheel;

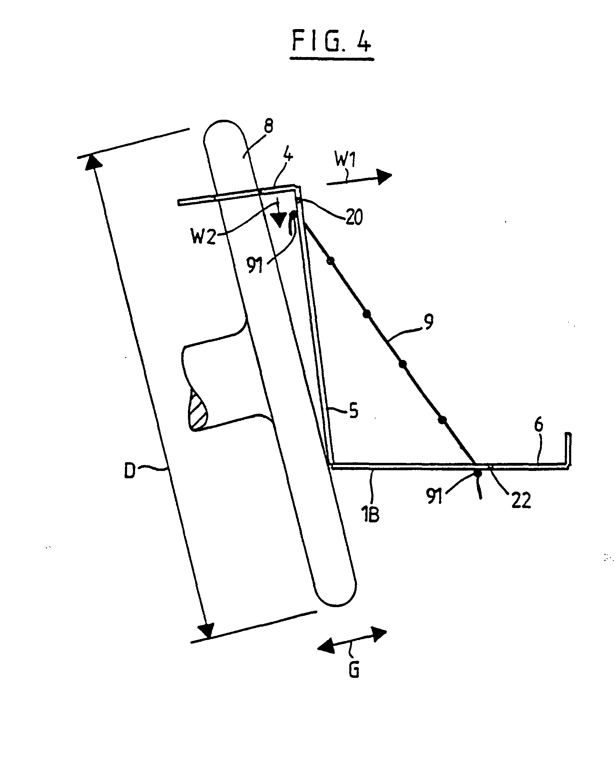

Fig 4 is a side view of the tray device of Fig 1 mounted on a steering wheel;
Fig 5 show the folding of the tray device of Fig 1;
Fig 6 and 7 are view similar to Fig 5, but for other embodiments of tray device of the invention.

### DESCRIPTION OF PREFERRED EMBODIMENTS

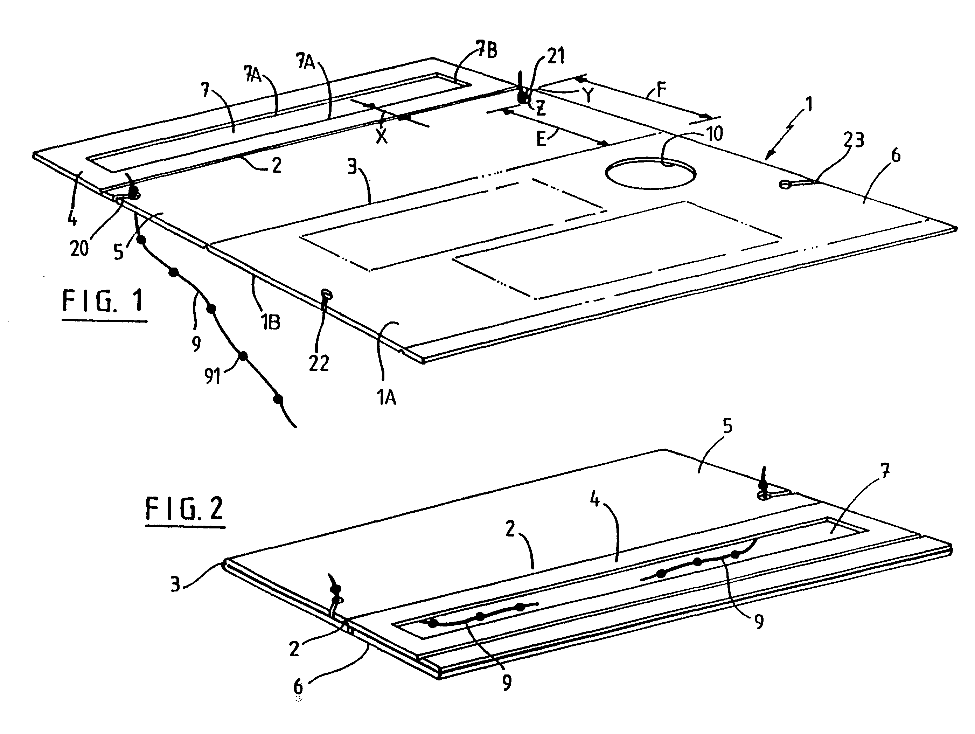

The tray device shown in Fig 1 has a supporting tray adapted for mounting on a substantially circular steering wheel 8 of a motor vehicle. Said device comprises:
(a) a rigid panel 1 with a front face 1A and a back face 1B, the said panel 1 being divided by two parallel traverse folding lines or pivotal lines 2,3 in three parts, namely a first central part 5 extending between the two pivotal lines 2,3, a second part 4 linked to said first part 5 along the first pivotal line 2, and a third part 6 linked to said first part 5 along the second pivotal line 3, the second part 4 having an substantially rectangular opening7, the larger edges 7A thereof having a length of about 25 cm. said length being however lower than the diameter D of the wheel 8, while the small edges 7B of the opening 7 have a length of about 4 to 6 cm, said length being at least equal to the thickness G of the wheel 8, said opening 7 being adapted to slide along the wheel 8 so that an upper part of the wheel 8 (about 1/4 of the wheel in this example) passes through said opening 7, whereby the small edges 7B of the opening 7 rest on the wheel 8 and whereby the back face 1B of the first part 5 partly contacts the wheel 8, and
(b) two cords 9 for linking the third part 6 and the first part 5 together so as to maintain said third part 6 substantially horizontal, when the tray device is mounted on a wheel.

The opening 7 of the second part 4 has a larger edge 7A adjacent to the first pivotal line 2, but located at a distance X of about 2.5 cm from said first pivotal line 2, whereby after mounting the second part 4 on the wheel 8 by sliding the opening 7 along said wheel 8, the back face 1B of the first part 5 only contacts the wheel 8 in the neighbourhood of the second pivotal line 3, the part of said back face 1B of the first part 5 adjacent to the first pivotal line 2 being distant from said wheel 8 of about 2.5 cm.

The cords 9 are provided with stops 91 for adjusting the length L of the parts of the cords extending between the first and the third parts 5,6. Stops 91 of each cord 9 cooperate with slots 20,21,22,23 of the first and third parts 5,6 so as to adjust the length L of the link between the first and the third part.

The first part 5 extends between a first lateral edge 5A and a second lateral edge 5B and has a first slot 20 extending from said first lateral edge 5A and a second slot 21 extending from the second lateral edge 5B, said slots 20,21 being adjacent to the first pivotal line 2 (for example at a distance of less than 5 cm of said pivotal line 2). The third part 6 extends between a first lateral edge 6A and a second lateral edge 6B and has a first slot 22 extending from said first lateral edge 6A and a second slot 23 extending from the second lateral edge 6B, said slots being distant from the second pivotal line of at least 10 cm. A first cord 9 is inserted in the first slot 20 of the first part 5 and in the first slot 22 of the third part 6 so that one stop 91 of the cord 9 abuts against the back face 1B of the first part 5, while another stop 91 of the cord abuts against the back face 1B of the third part 6. A second cord 9 is inserted in the second slot 21 of the first part 5 and in the second slot 23 of the third part 6 so that one stop 91 of the cord 9 abuts against the back face of the first part 5, while another stop 91 of the cord abuts against the back face of the third part 6. By selecting the stops to contact the back face of the first and third part, the length L of links can be adjusted.

The first and second pivotal lines 2,3 are formed respectively by a first groove 2 extending between the two lateral edges of the panel 1 and a second groove 3 extending between the two lateral edges of the panel, a first groove 2 being located on the front face 1A of the panel, while the second groove 3 is located on the back face 1B of the panel.

The slots 20,21,22,23 are not parallel to the pivotal lines 2,3 and extend between a first end Y located along one lateral edge of the panel and a second end Z, the distance E separating said second end Z from the second pivotal line 3 being lower than the distance F separating the first end Y from the second pivotal line 3. This is advantageous for preventing the removal of the cord out of the slot when the tray device is mounted on the wheel.

The third part 6 can be provided with an opening 10, in which a glass 11 can partly be inserted. Said third part, when positioned in a substantially horizontal plane, is suitable for supporting various elements or pieces, for example a lunch plate, a personal computer (such as a lap top or notebook), a book, writing material, etc.

Due to the fact that the first part only contacts partly the wheel, the risk of a non desired sliding of the second part 4 along the wheel can be prevented. This is due to the fact that the second part 4 is subjected. when mounted on the wheel, to a horizontal force W1 and to a vertical force W2.

Most preferably, the slots 22,23 are located in the neighbourhood of the free end of the part 6, for example at a distance from the second pivotal line 3 corresponding to more than 50% of the distance separating the free end of the part 6 and the second pivotal line. Especially, the slots 22,23 are located at a distance from the pivotal line 3 of more than 66% of the distance between the free end of the part 6 and the second pivotal line 3.

In the embodiment shown in Fig 1, the distance between the two pivotal lines 2 and 3 is lower than the distance between the second pivotal line and the free end of the part 6. However, in possible embodiments which are advantageous, the distance between the two pivotal lines 2 and 3 is greater than the distance between the second pivotal line and the free end of the part 6.

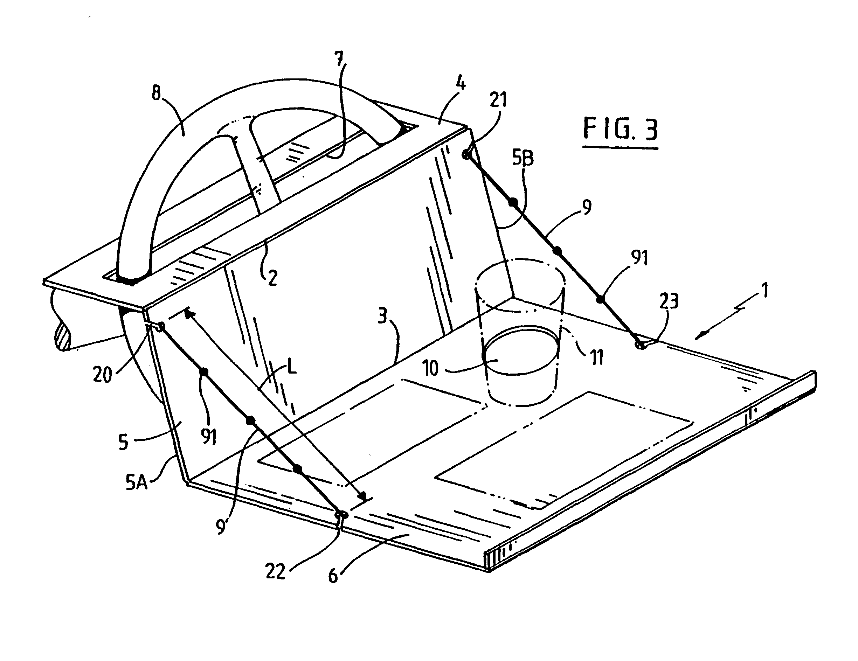

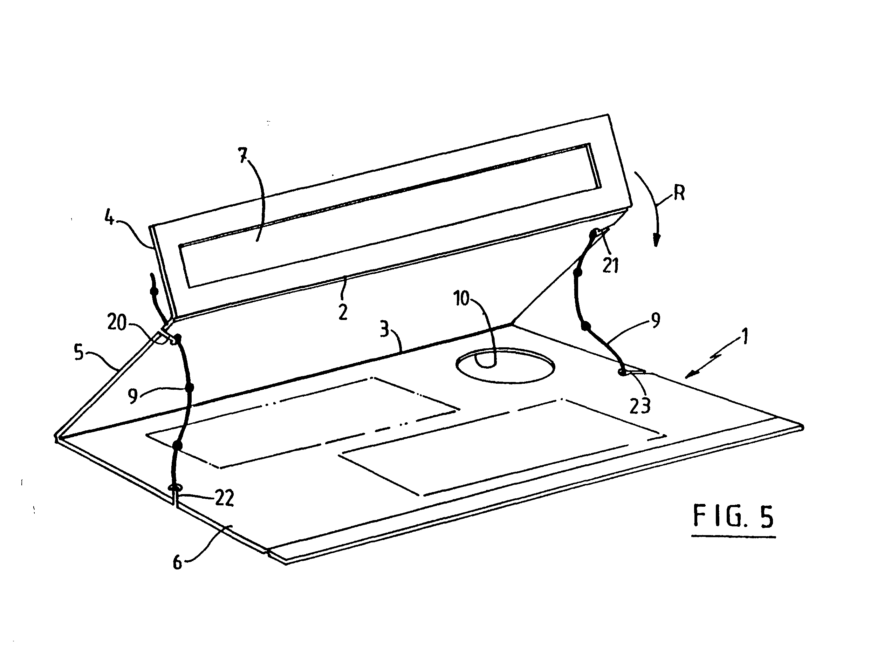

Fig 5 shows the folding back (pivotment R) of the tray device of Fig 3, so as to reach the compact position shown in Fig 2.

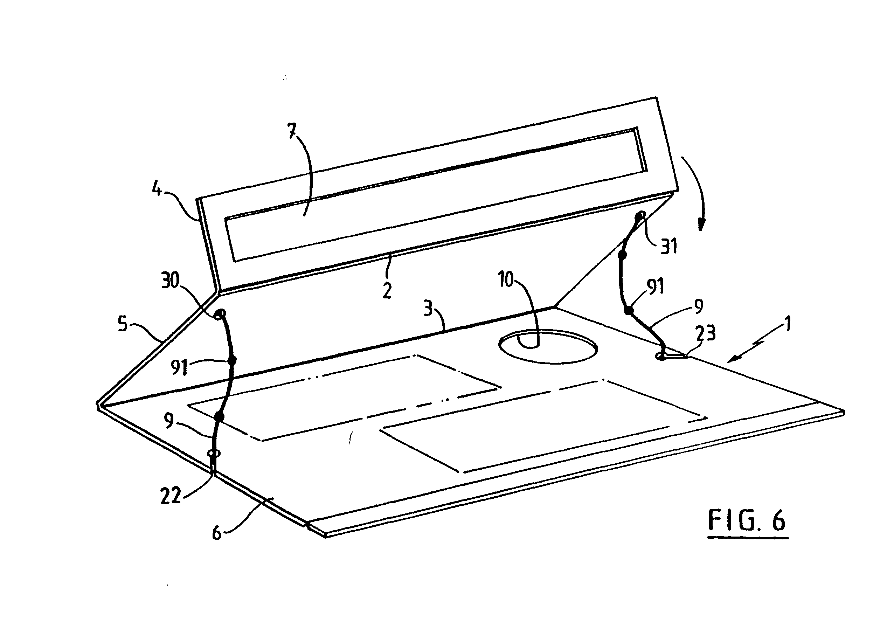

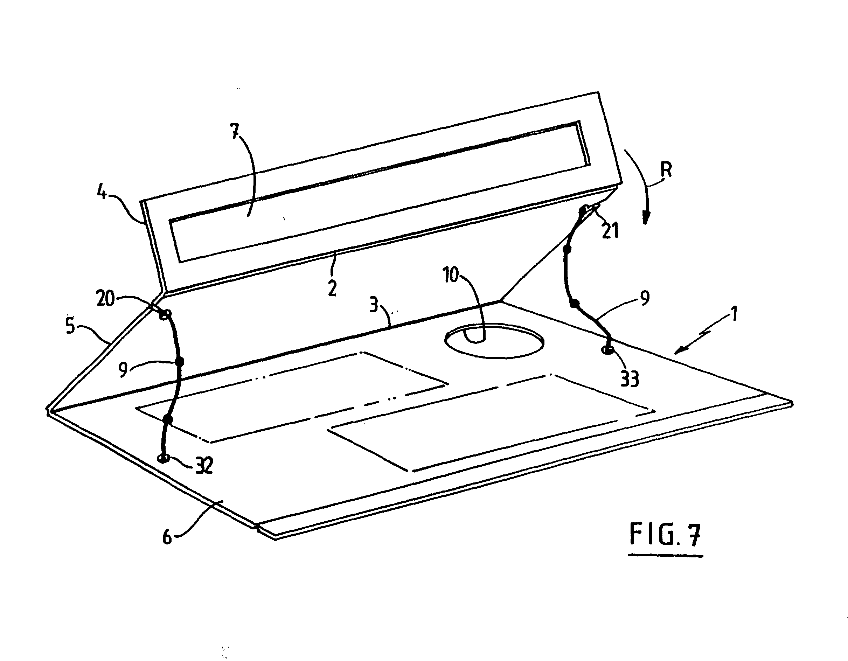

Figures 6 and 7 are views of embodiments similar to that shown in Fig 5, except that in Fig 6, the slots 20,21 have been replaced by holes 30,31, while in Fig 7, the slots 22,23 have been replaced by the holes 32,33.

Instead of using grooves for forming the pivotal lines 2,3 as shown in Fig. 1, it is possible to use partial cuttings, a serial of partial cuttings or openings extending through the thickness of the panel, rows of holes, and combinations thereof for forming said pivotal lines 2,3.

The slots 20,21,22,23 are straight in the Figures, however said slots can possibly be curved towards the second pivotal lines 3.

## Claims

1. A device including a supporting tray adapted to be mounted on a substantially circular steering wheel (8) of a motor vehicle, said device comprising
(a) a rigid panel (1) with a front face (1A) and a back face (1B), said panel (1) being divided by two parallel traverse first and second pivotal lines (2,3) in three parts, namely a first central part (5) extending between the two pivotal lines (2,3), a second part (4) linked to said first part (5) along the first pivotal line (2), and a third part (6) linked to said first part (5) along the second pivotal line (3), the second part (4) having a substantially rectangular opening (7), said opening (7) being adapted to slide along the wheel (8) so that a part of the wheel (8) passes through said opening (7), whereby the short side edges (7B) of the substantially rectangular opening (7) are adapted to rest on the wheel (8), and whereby the back face (1B) of the first part (5) is adapted partly to contact the wheel (8); and
(b) at least one means (9) linking the third part (6) and the first part (5) together so as to maintain said third part (6) substantially horizontal.

2. The device of claim 1, in which the opening (7) of the second part (4) is distant from the first pivotal line (2), whereby after the second part (4) is mounted on the wheel (8) by sliding the opening (7) along said wheel (8), the back face (1B) of the first part:.(5) is adapted to contact the wheel (8) only in a neighbourhood of the second pivotal line (3), the part of said back face (1B) of the first part (5) adjacent to the first pivotal line (2) being adapted to be distant from the wheel (8).

3. The device of claim 1, in which the opening (7) of the second part (4) has a larger side edge (7A) adjacent to the first pivotal line (2), but located at a distance of at least 0.5 cm from said first pivotal line (2), whereby after the second part (4) is mounted on the wheel (8) by sliding the opening (7) along said wheel (8), the back face (1B) of the first part (5) being adapted to contact the wheel (8) only in a neighbourhood of the second pivotal line (3), the part of said back face (1B) of the first part (5) adjacent to the first pivotal line (2) being adapted to be distant from said wheel (8) of at least 0.5 cm.

4. The device of claim 1, in which the means (9) linking the first part (5) and the third part (6) together for maintainig the third part (6) substantially horizontal consists of links provided with means for adjusting the length of the links between the first and the third parts (5, 6).

5. The device of claim 1, in which the means (9) linking the first part (5) and the third part (6) together for maintaining the third part (6) substantially horizontal consists of links provided with stops (91), the stops (91) of each link co-operating with an opening (22, 23) of the third part (6) so as to adjust the length of the link between the first and the third parts (5, 6).

6. The device of claim 1, in which the first part (5) extends between a first lateral edge (5A) and a second lateral edge (5B) and has a first slot (20) extending from said first lateral edge (5A) and a second slot (21) extending from the second lateral edge (5B), and
in which the means (9) linking the third part (6) and the first part (5) together for maintaining the third part (6) substantially horizontal consists of a first cord provided with stops (91) and a second cord provided with stops (91), each cord being attached to the third part (6), the first cord being inserted in the first slot (20) so that one stop (91) of the cord abuts against the back face (1B) of the first part (5), while the second cord is inserted in the second slot (21) so that one stop (91) of the cord abuts against the back face (1B) of the first part (5).

7. The device of claim 1, in which the third part (6) extends between a first lateral edge (6A) and a second lateral edge (6B) and has a first slot (22) extending from said first lateral edge (6A) and a second slot (23) extending from the second lateral edge (6B), and
in which the means (9) linking the third part (6) and the first part (5) together for maintaining the third part (6) substantially horizontal consists of a | first cord provided with stops (91) and a second cord provided with stops (91), each cord being attached to the first part (5), the first cord being inserted in the first slot (22) so that one stop (91) of the cord abuts against the back face (1B) of the third part (6), while the second cord is inserted in the second slot (23) so that one stop (91) of the cord abuts against the back face (1B) of the third part (6).

8. The device of claim 1, in which the first part (5) extends between a first lateral edge (5A) and a second lateral edge (5B) and has a first slot (20) extending from said first lateral edge (5A) and a second slot (21) extending from the second lateral edge (5B),
in which the third part (6) extends between a first lateral edge (6A) and a second lateral edge (6B) and has a first slot (22) extending from said first lateral edge (6A) and a second slot (23) extending from the second lateral edge (6B),
in which the means (9) linking the third part (6) and the first part (5) together for maintaining the third part (6) substantially horizontal consists of a first cord provided with stops (91) and a second cord provided with stops (91),
in which the first cord is inserted in the first slot (20) of the first part (5) and in the first slot (22) of the third part (6) so that one stop (91) of the cord abuts against the back face (1B) of the first part (5), while another stop (91) of the cord abuts against the back face (1B) of the third part (6), and
in which the second cord is inserted in the second slot (21) of the first part (5) and in the second slot (23) of the third part (6) so that one stop (91) of the cord abuts against the back face (1B) of the first part (5), while another stop (91) of the cord abuts against the back face (1B) of the third part (6).

9. The device of claim 1, in which the pivotal lines (2, 3) are formed by a means extending between the two opposite lateral edges of the panel (1), said means being selected from the group consisting of grooves, partial cuttings, cuttings extending partly in the tickness of the panel (1), rows of holes, and combinations thereof.

10. The device of claim 1, in which the first and second pivotal lines (2, 3) are formed respectively by a first groove (2) extending between the two lateral edges of the panel (1) and a second groove (3) extending between the two lateral edges of the panel (1), the first groove (2) being located on the front face (1A) of the panel (1), while the second groove (3) is located on the back face (1B) of the panel (1).

11. The device of claim 6, in which the slots (20, 21) are not parallel to the pivotal lines (2, 3) and extend between a first end (Y) located along one lateral edge of the panel (1) and a second end (Z), the distance (E) separating said second end (Z) from the second pivotal line (3) being lower than the distance (F) separating the first end (Y) from the second pivotal line (3).

12. The device of claim 7, in which the slots (22, 23) are not parallel to the pivotal lines (2, 3) and extend between a first end (Y) located along one lateral edge of the panel (1) and a second end (Z), the distance (E) separating said second end (Z) from the second pivotal line (3) being lower than the distance (F) separating the first end (Y) from the second pivotal line (3).

13. The device of claim 8, in which the slots (20, 21, 22, 23) are not parallel to the pivotal lines (2, 3) and extend between a first end (Y) located along one lateral edge of the panel (1) and a second end (Z), the distance (E) separating said second end (Z) from the second pivotal line (3) being lower than the distance (F) separating the first end (Y) from the second pivotal line (3).

## Patentansprüche

1. Vorrichtung, umfassend eine Tischplatte, die für die Anbringung auf einem im Wesentlichen kreisrunden Lenkrad (8) eines Kraftfahrzeugs ausgelegt ist, wobei die Vorrichtung umfasst:
(a) eine steife Platte (1) mit einer Vorderseite (1A) und einer Rückseite (1B), wobei die Platte (1) durch zwei parallele, quer liegende erste und zweite Klapplinien (2, 3) in drei Teile geteilt ist, nämlich einen ersten zentralen Teil (5), der sich zwischen den zwei Klapplinien (2, 3) erstreckt, einen zweiten Teil (4), der mit dem ersten Teil (5) entlang der ersten Klapplinie (2) verbunden ist, und einen dritten Teil (6), der mit dem ersten Teil (5) entlang der zweiten Klapplinie (3) verbunden ist, wobei der zweite Teil (4) eine im Wesentlichen rechteckige Öffnung (7) aufweist, wobei die Öffnung (7) so ausgelegt ist, um entlang des Lenkrads (8) zu gleiten, so dass ein Teil des Lenkrads (8) durch die Öffnung (7) hindurch geht, wobei die kurzen Seitenkanten (7B) der im Wesentlichen rechteckigen Öffnung (7) so ausgelegt sind, um auf dem Lenkrad (8) aufzusitzen und wobei die Rückseite (1 B) des ersten Teils (5) so ausgelegt ist, um das Lenkrad (8) zu berühren; und
(b) wenigstens ein Mittel (9), um den dritten Teil (6) und den ersten Teil (5) zu verbinden, um so den dritten Teil (6) im Wesentlichen horizontal zu halten.

2. Vorrichtung nach Anspruch 1, in welcher die Öffnung (7) des zweiten Teils (4) von der ersten Klapplinie (2) entfernt liegt, wobei, nachdem der zweite Teil (4) auf dem Lenkrad (8) durch Gleiten der Öffnung (7) entlang des Lenkrades (8) angebracht ist, die Rückseite (1B) des ersten Teils (5) so ausgelegt ist, um das Lenkrad (8) nur in der Nachbarschaft der zweiten Klapplinie (3) zu berühren, wobei der Teil der Rückseite (1B) des ersten Teils (5) benachbart der ersten Klapplinie (2) so ausgelegt ist, um entfernt vom Lenkrad (8) zu sein.

3. Vorrichtung nach Anspruch 1, in welcher die Öffnung (7) des zweiten Teils (4) eine größere Seitenkante (7A) benachbart zur ersten Klapplinie (2) aufweist, aber mit einem Abstand von wenigstens 0,5 cm von der ersten Klapplinie (2) angeordnet, wobei, nachdem der zweite Teil (4) auf dem Lenkrad (8) durch Aufschieben der Öffnung (7) entlang des Lenkrades (8) angebracht ist, die Rückseite (1B) des ersten Teils (5) so gestaltet ist, um mit dem Lenkrad (8) nur in einer Nachbarschaft der zweiten Klapplinie (3) in Kontakt zu kommen, wobei der Teil der Rückseite (1B) des ersten Teils (5) benachbart der ersten Klapplinie (2) so gestaltet ist, um vom Lenkrad (8) wenigstens 0,5 cm entfernt zu sein.

4. Vorrichtung nach Anspruch 1, in welcher das Mittel (9), das den ersten Teil (5) und den dritten Teil (6) miteinander verbindet, um den dritten Teil (6) im Wesentlichen horizontal zu halten, Verbindungselemente umfasst, die mit Mitteln zum Anpassen der Länge der Verbindungselemente zwischen dem ersten und dem dritten Teil (5, 6) ausgestattet sind.

5. Vorrichtung nach Anspruch 1, in welcher das Mittel (9), das den ersten Teil (5) und den dritten Teil (6) miteinander verbindet, um den dritten Teil (6) im Wesentlichen horizontal zu halten, Verbindungselemente umfasst, die mit Anschlägen (91) ausgestattet sind, wobei die Anschläge (91) jedes Verbindungselements mit einer Öffnung (22, 23) des dritten Teil (6) zusammenwirken, um so die Länge der Verbindungselemente zwischen dem ersten und dem dritten Teil (5, 6) anzupassen.

6. Vorrichtung nach Anspruch 1, in welcher der erste Teil (5) sich zwischen einer ersten seitlichen Kante (5A) und einer zweiten seitlichen Kante (5B) erstreckt und einen Schlitz (20), der sich von der ersten seitlichen Kante (5A) aus erstreckt, und einen zweiten Schlitz (21) aufweist, der sich von der zweiten seitlichen Kante (5B) aus erstreckt, und
in welcher das Mittel (9), das den dritten Teil (6) und den ersten Teil (5) miteinander verbindet, um den dritten Teil (6) im Wesentlichen horizontal zu halten, eine erste Schnur, die mit Anschlägen (91) versehen ist, und eine zweite Schnur, die mit Anschlägen (91) versehen ist, umfasst, wobei jede Schnur am dritten Teil (6) angebracht ist und wobei die erste Schnur in den ersten Schlitz (20) eingeschoben wird, so dass ein Anschlag (91) der Schnur gegen die Rückseite (1B) des ersten Teils (5) stößt, während die zweite Schnur in den zweiten Schlitz (21) eingeschoben wird, so dass ein Anschlag (91) der Schnur gegen die Rückseite (1B) des ersten Teils (5) stößt.

7. Vorrichtung nach Anspruch 1, in welcher der dritte Teil (6) sich zwischen einer ersten seitlichen Kante (6A) und einer zweiten seitlichen Kante (6B) erstreckt und die einen Schlitz (22), der sich von der ersten seitlichen Kante (6A) aus erstreckt, und einen zweiten Schlitz (23) aufweist, der sich von der zweiten seitlichen Kante (6B) aus erstreckt, und
in welcher das Mittel (9), das den dritten Teil (6) und den ersten Teil (5) miteinander verbindet, um den dritten Teil f6) im Wesentlichen horizontal zu halten, eine erste Schnur, die mit Anschlägen (91) versehen ist, und eine zweite Schnur, die mit Anschlägen (91) versehen ist, umfasst, wobei jede Schnur am ersten Teil (5) befestigt ist und wobei die erste Schnur in den ersten Schlitz (22) eingeschoben wird, so dass ein Anschlag (91) der Schnur gegen die Rückseite (1B) des dritten Teils (6) stößt, während die zweite Schnur in den zweiten Schlitz (23) eingeschoben wird, so dass ein Anschlag (91) der Schnur gegen die Rückseite (1B) des dritten Teils (6) stößt.

8. Vorrichtung nach Anspruch 1, in welcher der erste Teil (5) sich zwischen einer ersten seitlichen Kante (5A) und einer zweiten seitlichen Kante (5B) erstreckt und die einen Schlitz (20), der sich von der ersten seitlichen Kante (5A) aus erstreckt, und einen zweiten Schlitz (21) aufweist, der sich von der zweiten seitlichen Kante (5B) aus erstreckt,
in welcher der dritte Teil (6) sich zwischen einer ersten seitlichen Kante (6A) und einer zweiten seitlichen Kante (6B) erstreckt und einen Schlitz (22), der sich von der ersten seitlichen Kante (6A) aus erstreckt, und einen zweiten Schlitz (23) aufweist, der sich von der zweiten seitlichen Kante (6B) aus erstreckt,
in welcher das Mittel (9), das den dritten Teil (6) und den ersten Teil (5) miteinander verbindet, um den dritten Teil (6) im Wesentlichen horizontal zu halten, eine erste Schnur, die mit Anschlägen (91) versehen ist, und eine zweite Schnur, die mit Anschlägen (91) versehen ist, umfasst,
in welcher die erste Schnur in den ersten Schlitz (20) des ersten Teils (5) und in den ersten Schlitz (22) des dritten Teils (6) eingeschoben wird, so dass ein Anschlag (91) der Schnur gegen die Rückseite (1B) des ersten Teils (5) stößt, während ein anderer Anschlag (91) der Schnur gegen die Rückseite (1B) des dritten Teils (6) stößt, und
in welcher die zweite Schnur in den zweiten Schlitz (21) des ersten Teils (5) und in den zweiten Schlitz (23) des dritten Teils (6) eingeschoben wird, so dass ein Anschlag (91) der Schnur gegen die Rückseite (1B) des ersten Teils (5) stößt, während ein anderer Anschlag (91) der Schnur gegen die Rückseite (1B) des dritten Teils (6) stößt.

9. Vorrichtung nach Anspruch 1, in welcher die Klapplinien (2, 3) durch ein Mittel ausgebildet sind, das sich zwischen den zwei gegenüberliegenden seitlichen Kanten der Platte (1) erstreckt, wobei das Mittel aus einer Gruppe ausgewählt wird, die Nuten, Teileinschnitte, Schnitte, die sich teilweise in die Dicke der Platte (1) erstrecken, Lochreihen und Verbindungen derselben umfasst.

10. Vorrichtung nach Anspruch 1, in welcher die Klapplinien (2, 3) entsprechend durch eine erste Nut (2), die sich zwischen den zwei seitlichen Kanten der Platte (1) erstreckt, und durch eine zweite Nut (3), die sich zwischen den zwei seitlichen Kanten der Platte (1) erstreckt, ausgebildet sind, wobei die erste Nut (2) an der Vorderseite (1A) der Platte (1) angeordnet ist, während die zweite Nut (3) an der Rückseite (1B) der Platte (1) angeordnet ist.

11. Vorrichtung nach Anspruch 6, in welcher die Schlitze (20, 21) nicht parallel zu den Klapplinien (2, 3) ausgebildet sind und sich zwischen einem ersten Ende (Y), das entlang einer seitlichen Kante der Platte (1) angeordnet ist, und einem zweiten Ende (Z) erstrecken, wobei der Abstand (E), der das zweite Ende (Z) von der zweiten Klapplinie (3) trennt, geringer ist als der Abstand (F), der das erste Ende (Y) von der zweiten Klapplinie (3) trennt.

12. Vorrichtung nach Anspruch 7, in welcher die Schlitze (22, 23) nicht parallel zu den Klapplinien (2, 3) ausgebildet sind und sich zwischen einem ersten Ende (Y), das entlang einer seitlichen Kante der Platte (1) angeordnet ist, und einem zweiten Ende (Z) erstrecken, wobei der Abstand (E), der das zweite Ende (Z) von der zweiten Klapplinie (3) trennt, geringer ist als der Abstand (F), der das erste Ende (Y) von der zweiten Klapplinie (3) trennt.

13. Vorrichtung nach Anspruch 8, in welcher die Schlitze (20, 21, 22, 23) nicht parallel zu den Klapplinien (2, 3) ausgebildet sind und sich zwischen einem ersten Ende (Y), das entlang einer seitlichen Kante der Platte (1) angeordnet ist, und einem zweiten Ende (Z) erstrecken, wobei der Abstand (E), der das zweite Ende (Z) von der zweiten Klapplinie (3) trennt, geringer ist als der Abstand (F), der das erste Ende (Y) von der zweiten Klapplinie (3) trennt.

## Revendications

1. Dispositif comprenant un plateau de support agencé pour être monté sur un volant sensiblement circulaire (8) d'un véhicule à moteur, ledit dispositif comprenant :
(a) un panneau rigide (1) ayant une face frontale (1A) et une face dorsale (1B), ledit panneau (1) étant divisé en trois parties par deux première et seconde lignes de pivotement parallèles transversales (2, 3), à savoir une première partie centrale (5) s'étendant entre les deux lignes de pivotement (2, 3), une deuxième partie (4) liée à la première partie (5) le long de la première ligne de pivotement (2) et une troisième partie (6) liée à la première partie (5) le long de la deuxième ligne de pivotement (3), la deuxième partie (4) possédant une ouverture sensiblement rectangulaire (7), ladite ouverture (7) étant agencée pour glisser le long du volant (8) de sorte qu'une partie du volant (8) passe au travers de ladite ouverture (7), les côtés étroits (7B) de l'ouverture sensiblement rectangulaire (7) étant agencés pour reposer sur le volant (8) et la face dorsale (1B) de la première partie (5) étant agencée pour entrer partiellement en contact avec le volant (8) ; et
(b) au moins un moyen (9) reliant la troisième partie (6) et la première partie (5) ensemble de sorte à maintenir la troisième partie (6) sensiblement horizontale.

2. Dispositif selon la revendication 1, dans lequel l'ouverture (7) de la deuxième partie (4) est distante de la première ligne de pivotement (2), de sorte qu'après que la seconde partie (4) soit montée sur le volant (8) par glissement de l'ouverture (7) le long du volant (8), la face dorsale (1B) de la première partie (5) puisse contacter le volant (8) seulement au voisinage de la deuxième ligne de pivotement (3), la partie de ladite face dorsale (1B) de la première partie (5) adjacente à la première ligne de pivotement (2) étant agencée pour être distante du volant (8).

3. Dispositif selon la revendication 1, dans lequel l'ouverture (7) de la deuxième partie (4) possède un bord latéral (7A) plus large du côté adjacent à la première ligne de pivotement (2) et disposé à une distance d'au moins 0.5 cm de ladite première ligne de pivotement (2), de sorte qu'après que la deuxième partie (4) soit montée sur le volant (8) par glissement de l'ouverture (7) le long dudit volant (8), la face dorsale (1B) de la première partie (5) soit agencée pour entrer en contact avec le volant (8) seulement au voisinage de la seconde ligne de pivotement (3), la partie de ladite face dorsale (1B) de la première partie (5) adjacente à la première ligne de pivotement (2) étant agencée pour être distante dudit volant (8) d'au moins 0.5 cm.

4. Dispositif selon la revendication 1, dans lequel le moyen (9) reliant la première partie (5) et la troisième partie (6) ensemble pour maintenir la troisième partie (6) sensiblement horizontale consiste en liens munis de moyens pour ajuster la longueur des liens entre la première et la troisième parties (5, 6).

5. Dispositif selon la revendication 1, dans lequel le moyen (9) reliant la première partie (5) et la troisième partie (6) ensemble pour maintenir la troisième partie (6) sensiblement horizontale consiste en liens munis d'arrêts (91), les arrêts (91) de chaque lien coopérant avec une ouverture (22, 23) de la troisième partie (6) de sorte à ajuster la longueur du lien entre les première et troisième parties (5, 6).

6. Dispositif selon la revendication 1, dans lequel la première partie (5) s'étend entre un premier bord latéral (5A) et un second bord latéral (5B) et possède une première fente (20) s'étendant depuis ledit premier bord latéral (5A) et une seconde fente (21) s'étendant depuis le second bord latéral (5B) et dans lequel le moyen (9) reliant la troisième partie (6) et la première partie (5) ensemble pour maintenir la troisième partie (6) sensiblement horizontale consiste en une première corde munie d'arrêts (91) et une seconde corde munie d'arrêts (91), chaque corde étant attachée à la troisième partie (6), la première corde étant insérée dans la première fente (20) de sorte qu'un arrêt (91) de la corde butte contre la face dorsale (1B) de la première partie (5) tandis que la seconde corde est insérée dans la seconde fente (21) de sorte qu'un arrêt (91) de la corde butte contre la face dorsale (1 B) de la première partie (5).

7. Dispositif selon la revendication 1, dans lequel la troisième partie (6) s'étend entre un premier bord latéral (6A) et un second bord latéral (6B) et possède une première fente (22) s'étendant depuis ledit premier bord latéral (6A) et une seconde fente (23) s'étendant depuis le second bord latéral (6B) et dans lequel le moyen (9) reliant la troisième partie (6) et la première partie (5) ensemble pour maintenir la troisième partie (6) sensiblement horizontale consiste en une première corde munie d'arrêts (91) et une seconde corde munie d'arrêts (91), chaque corde étant attachée à la première partie (5), la première corde étant insérée dans la première fente (22) de sorte qu'un arrêt (91) de la corde butte contre la face dorsale (1B) de la troisième partie (6) alors que la seconde corde est insérée dans la seconde fente (23) de sorte qu'un arrêt (91) de la corde butte contre la face dorsale (1B) de la troisième partie (6).

8. Dispositif selon la revendication 1, dans lequel la première partie (5) s'étend entre un premier bord latéral (5A) et un second bord latéral (5B) et possède une première fente (20) s'étendant depuis ledit premier bord latéral (5A) et une seconde fente (21) s'étendant depuis le second bord latéral (5B), dans lequel la troisième partie (6) s'étend entre un premier bord latéral (6A) et un second bord latéral (6B) et possède une première fente (22) s'étendant depuis ledit premier bord latéral (6A) et une seconde fente (23) s'étendant depuis le second bord latéral (6B), dans lequel le moyen (9) reliant la troisième partie (6) et la première partie (5) ensemble pour maintenir la troisième partie (6) sensiblement horizontale consiste en une première corde munie d'arrêts (91) et une seconde corde munie d'arrêts (91), dans lequel la première corde est insérée dans la première fente (20) de la première partie (5) et dans la première fente (22) de la troisième partie (6) de sorte qu'un arrêt (91) de la corde butte contre la face dorsale (1B) de la première-partie (5) tandis qu'un autre arrêt (91 ) de la-corde-butte contre la face dorsale (1B) de la troisième partie (6) et dans lequel la seconde corde est insérée dans la seconde fente (21) de la première partie (5) et dans la seconde fente (23) de la troisième partie (6) de sorte qu'un arrêt (91) de la corde butte contre la face dorsale (1B) de la première partie (5) tandis qu'un autre arrêt (91 ) de la corde butte contre la face dorsale (1B) de la troisième partie (6).

9. Dispositif selon la revendication 1, dans lequel les lignes de pivotement (2,3) sont constituées d'un moyen s'étendant entre les deux côtés latéraux opposés parallèles du panneau (1), ledit moyen étant choisi dans le groupe des gorges, découpes partielles, découpes s'étendant partiellement dans l'épaisseur du panneau (1), rangées d'orifices et les combinaisons de ceux-ci.

10. Dispositif selon la revendication 1, dans lequel les première et seconde lignes de pivotement (2, 3) sont constituées respectivement d'une première gorge (2) s'étendant entre les deux bords latéraux du panneau (1) et une seconde gorge (3) s'étendant entre les deux bords latéraux du panneau (1), la première gorge (2) étant disposée sur la face frontale (1A) du panneau (1) tandis que la seconde gorge (3) est disposée sur la face dorsale (1B) du panneau (1).

11. Dispositif selon la revendication 6, dans lequel les fentes (20, 21) ne sont pas parallèles aux lignes de pivotement (2, 3) et s'étendent entre une première extrémité (Y) disposée le long d'un bord latéral du panneau (1) et une seconde extrémité (Z), la distance (E) séparant ladite seconde extrémité (Z) de la seconde ligne de pivotement (3) étant inférieure à la distance (F) séparant la première extrémité (Y) de la seconde ligne de pivotement (3).

12. Dispositif selon la revendication 7, dans lequel les fentes (22, 23) ne sont pas parallèles aux lignes de pivotement (2, 3) et s'étendent entre une première extrémité (Y) disposée le long d'un bord latéral du panneau (1) et une seconde extrémité (Z), la distance (E) séparant ladite seconde extrémité (Z) de la seconde ligne de pivotement (3) étant inférieure à la distance (F) séparant la première extrémité (Y) de la seconde ligne de pivotement (3).

13. Dispositif selon la revendication 8 dans lequel les fentes (20, 21, 22, 23) ne sont pas parallèles aux lignes de pivotement (2, 3) et s'étendent entre une première extrémité (Y) disposée le long d'un bord latéral du panneau (1) et une seconde extrémité (Z), la distance (E) séparant ladite seconde extrémité (Z) de la seconde ligne de pivotement (3) étant inférieure à la distance (F) séparant la première extrémité (Y) de la seconde ligne de pivotement (3).
